Europäisches Patentamt

**European Patent Office**

**Office européen des brevets**

(11) Veröffentlichungsnummer: **0 054 738**
**B1**

(12) **EUROPÄISCHE PATENTSCHRIFT**

(45) Veröffentlichungstag der Patentschrift:
**09.03.88**

(21) Anmeldenummer: **81109458.0**

(22) Anmeldetag: **31.10.81**

(51) Int. Cl.⁴: **H 04 N 5/21**

(54) Verfahren und Anordnung zur Unterdrückung des niederfrequenten Rauschens bei Ausgangssignalen von Halbleiter-Sensoren.

(30) Priorität: **24.12.80 DE 3049043**

(43) Veröffentlichungstag der Anmeldung:
**30.06.82 Patentblatt 82/26**

(45) Bekanntmachung des Hinweises auf die Patenterteilung:
**09.03.88 Patentblatt 88/10**

(84) Benannte Vertragsstaaten:
**DE FR GB**

(56) Entgegenhaltungen:
**DE - A - 2 938 499**
**FR - A - 1 381 103**
**US - A - 3 830 972**
**US - A - 4 174 525**

**PATENTS ABSTRACTS OF JAPAN, Band 3, Nr. 145**
**(E-155), 30. November 1979, Seite 113 E 155**
**PATENTS ABSTRACTS OF JAPAN, Band 1, Nr. 63, 20.**
**Juni 1977, Seite 280 E 77**

(73) Patentinhaber: **ROBERT BOSCH GMBH, Postfach 50,**
**D-7000 Stuttgart 1 (DE)**

(72) Erfinder: **Zappen, Hans-W., Dipl.-Ing., Knodener**
**Strasse 18, D-6140 Bensheim (DE)**
Erfinder: **Poetsch, Dieter, Dipl.-Ing.,**
**Rostockerstrasse 29, D-6105 Ober-Ramstadt (DE)**
Erfinder: **Lehmann, Klaus, Konrad-Adenauer-Strasse,**
**D-6109 Mühltal 1 (DE)**
Erfinder: **Zimmermann, Friedrich, Dipl.-Ing., An der**
**Fuchsenhütte 31, D-6101 Rossdorf (DE)**
Erfinder: **Müller, Klaus D., Georg-Büchner-Strasse 8b,**
**D-6108 Weiterstadt 1 (DE)**

(74) Vertreter: **Gornott, Dietmar, Dipl.-Ing., c/o**
**Robert-Bosch GmbH**
**Postfach 429 Robert-Bosch-Strasse 7,**
**D-6100 Darmstadt (DE)**

## Beschreibung

### Stand der Technik

Die Erfindung betrifft ein Verfahren nach der Gattung des unabhängigen Anspruchs. Sowohl bei Flächen- als auch zeilenförmigen optoelektronischen Halbleiter-Sensoren werden Ladungen, welche der jeweiligen Helligkeit einzelner Bildpunkte entsprechen, im Takt von Taktsignalen zu einem Ausgang bzw. zu mehreren Ausgängen transportiert und sind dann als Signal abnehmbar. Der Signalverlauf einer Taktperiode ist derart, dass an jedem Ausgang ein jeweils von der Helligkeit abhängiger Maximal-Wert auf einen von der Helligkeit unabhängigen Minimalwert folgt.

Bei üblicherweise verwendeten Halbleiter-Zeilensensoren sind zwei Ausgänge vorgesehen, deren Ausgangssignale um 180° gegeneinander phasenverschoben sind. Da die Ausgangssignale der Zeilensensoren sehr klein sind, sind entsprechende Verstärker vorgesehen, welche bei einigen Halbleiter-Zeilensensoren bereits in diesen Sensoren integriert sind. In den Verstärkern entsteht nun ein Rauschsignal, welches sich additiv dem Nutzsignal überlagert.

Aus der JP-A-54 124 629 ist bereits eine Schaltung mit einem Halbleiter-Sensor bekannt, mit welcher das niederfrequente Rauschen bei den je einen Maximal- und einen Minimalwert aufweisenden Ausgangssignalen des Halbleiter-Sensors unterdrückt wird. Hierbei werden die Minimalwerte mit Hilfe einer Klemmschaltung auf konstantes Potential gebracht.

Weiterhin ist aus der JP-A-52-4113 ein Verfahren zur Unterdrückung des niederfrequenten Rauschens in den Ausgangssignalen eines Halbleiter-Sensors bekannt, wobei das Basisband der Ausgangssignale unterdrückt und nur das dem Abtasttakt entsprechende Trägerband für die Gewinnung der ungestörten Videosignale ausgenutzt wird. Hierbei werden die geträgerten Ausgangssignale synchrondemoduliert.

Der vorliegenden Erfindung liegt die Aufgabe zugrunde, ein Verfahren der eingangs genannten Art anzugeben, mit dessen Hilfe das additiv überlagerte Rauschen besonders einfach zu eliminieren ist.

### Vorteile der Erfindung

Das erfindungsgemässe Verfahren mit den Merkmalen des unabhängigen Anspruchs hat den Vorteil, dass dieser, im wesentlichen niederfrequente Rauschanteil weitgehend unterdrückt wird.

Durch die in den abhängigen Ansprüchen aufgeführten Massnahmen sind vorteilhafte Anordnungen zur Durchführung des Verfahrens angegeben.

### Zeichnung

Ausführungsbeispiele der Erfindung sind in der Zeichnung dargestellt und in der nachfolgenden Beschreibung näher erläutert. Es zeigen:

Fig. 1 schematisch einen Halbleiter-Zeilensensor,

Fig. 2 das Signal- und Rauschspektrum des Ausgangssignals eines Halbleiter-Zeilensensors,

Fig. 3 ein Blockschaltbild eines ersten Ausführungsbeispiels,

Fig. 4 ein Blockschaltbild eines zweiten Ausführungsbeispiels,

Fig. 5a eine detaillierte Schaltung des zweiten Ausführungsbeispiels und

Fig. 5b Spannungs-Zeit-Diagramme der in Fig. 5a auftretenden Signale.

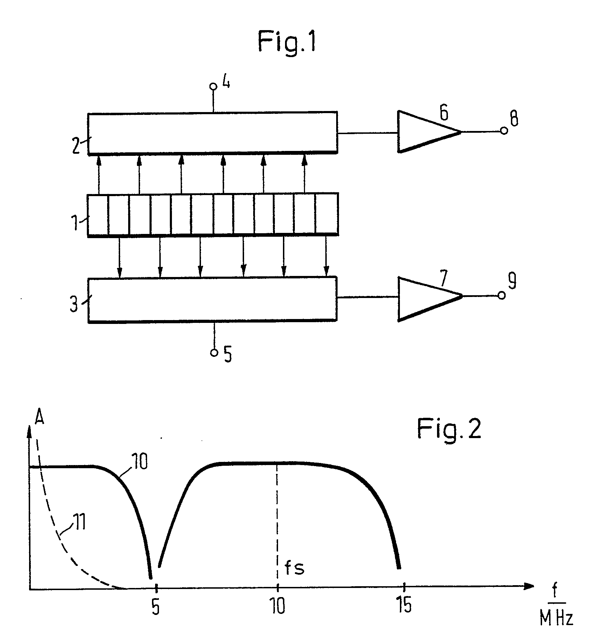

Bei dem Halbleiter-Zeilensensor nach Fig. 1 stellt 1 den eigentlichen Bildbereich dar, während die Schieberegister 2 und 3 im Takt von bei 4 und 5 zugeführten Taktimpulsen die Ladungen aus dem Bildbereich zu den Ausgängen transportieren. An den Ausgängen der Schieberegister 2, 3 ist je ein Verstärker 6, 7 angeordnet, an dessen Ausgängen 8 und 9 die Signale abnehmbar sind.

Diese Ausgangssignale weisen das in Fig. 2 dargestellte Spektrum auf, welches bei einer Abtastfrequenz fs von 10 MHz ein Basisband bis etwa 5 MHz umfasst. Zur Gewinnung von Videosignalen wird dieses Basisband üblicherweise durch einen Tiefpass abgetrennt, so dass ein Videosignal entsprechend der mit 10 bezeichneten Spektralverteilung auftritt. Wie eingangs erwähnt, ist diesem Signal Rauschen überlagert, dessen Spektralverteilung etwa der Kurve 11 entspricht. Das Spektrum umfasst ferner einen Träger bei 10 MHz sowie dessen Seitenbänder von +/−5 MHz.

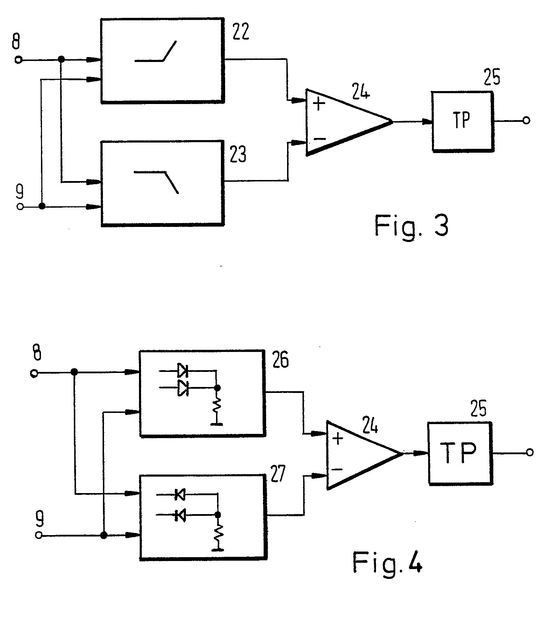

Bei dem Ausführungsbeispiel nach Fig. 3 werden die Minimal- und Maximal-Werte durch Schwellwertschaltungen 22, 23 voneinander getrennt. Die Ausgangssignale der Schwellwertschaltungen 22 und 23 werden den Eingängen einer Subtrahierschaltung 24 zugeführt. Dadurch wird erreicht, dass lediglich die Differenz zwischen den Maximal- und Minimal-Werten ermittelt wird und über den Tiefpass 25 als Videosignal zur Verfügung steht.

Bei der Anordnung nach Fig. 4 erfolgt die Trennung der Minimal- und Maximal-Werte durch nichtadditive Mischschaltungen 26 und 27, welche im wesentlichen aus jeweils zwei Transistoren bestehen, welche über ihre Emitter mit einem gemeinsamen Arbeitswiderstand verbunden sind.

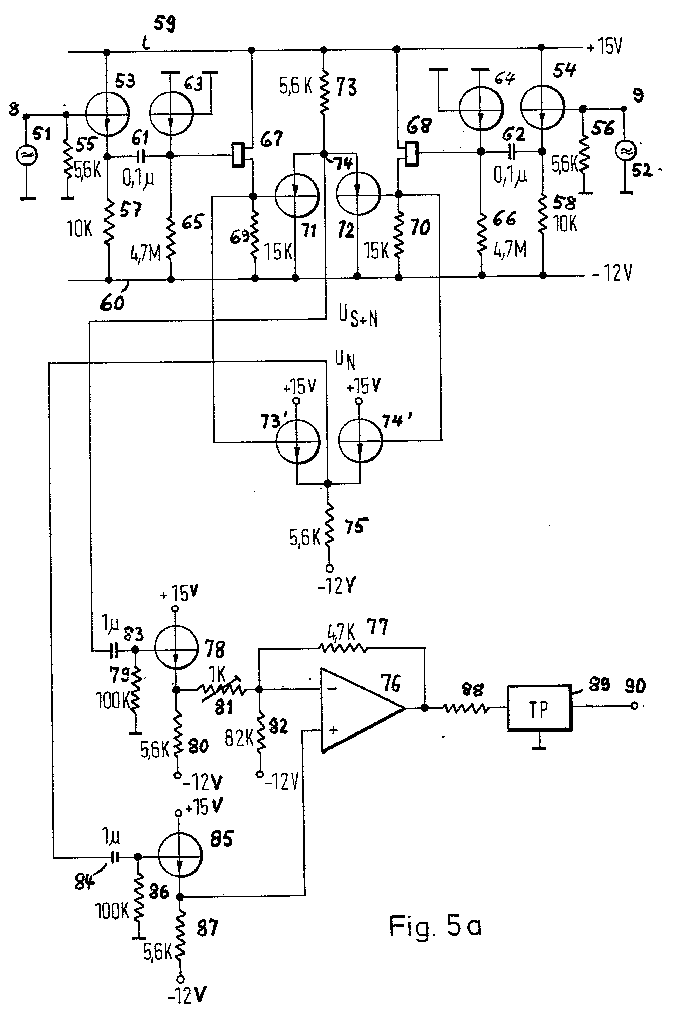

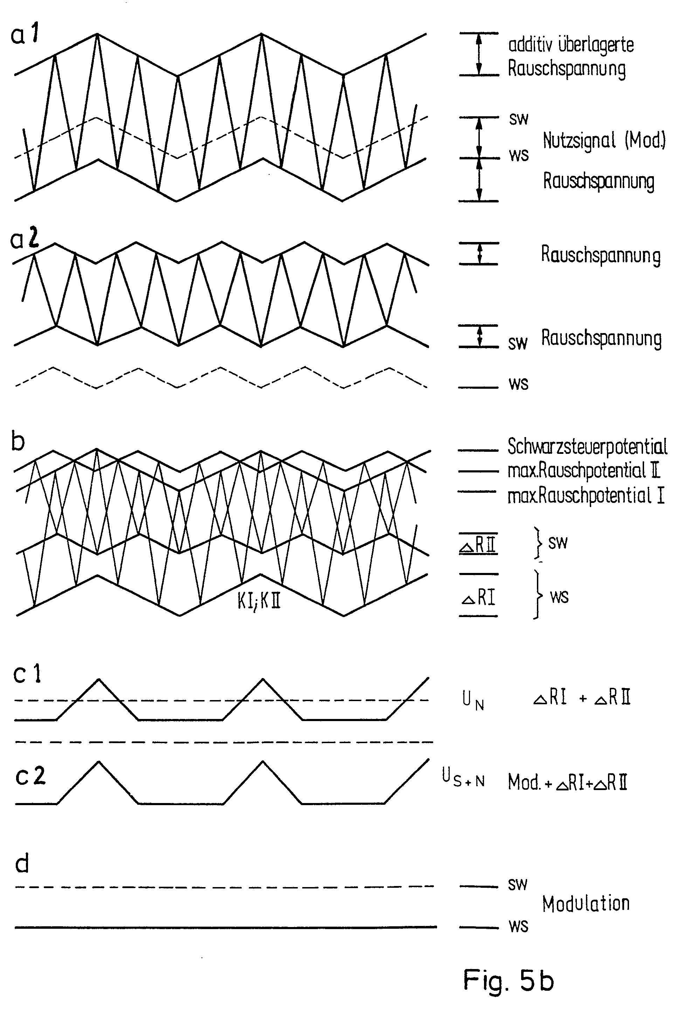

Der Schaltung nach Fig. 5a werden an den Punkten 8 und 9 jeweils die Ausgangssignale des Sensors zugeführt. Die entsprechenden Ausgangsschaltungen des Sensors (s. Fig. 1) sind in Fig. 5a lediglich schematisch als Generatoren 51 und 52 dargestellt. Die Form der bei 8 und 9 der Schaltungsanordnung nach Fig. 5a zugeführten Signale ist in Fig. 5b in den Zeilen a1 und a2 dargestellt. Da die Schieberegister 2 und 3 (Fig. 1) abwechselnd getaktet werden, ergibt sich ein entsprechend phasenverschobenes Auslesen der Signale. Die sich ergebende Impulsform ist in Fig. 5b schematisch als dreieckförmige Spannung angegeben, wobei die jeweils nach oben gezeichnete Amplitude in demjenigen Impulsintervall abgegeben wird, in welchem keine Information aus dem Sensor ausgelesen wird, während die nach unten gezeichnete Amplitude der jeweils ausgelesenen Information entspricht. In Fig. 5b, Zeile a1, wird angenommen, dass das ausgelesene Signal der maximalen Belichtung (ws = weiss) entspricht, während der Pegel für den unbelichteten Sensor lediglich gestrichelt dargestellt ist (sw = schwarz). Bei dem in Fig. 5b, Zeile a2, dargestellten Signal wird von einem unbelichteten Sensor ausgegangen, der Pegel für Maximalbelichtung (ws) ist gestrichelt dargestellt.

Beiden Signalen ist nun ein Rauschen überlagert, welches im wesentlichen durch die Verstärker 6 und 7 (Fig. 1) verursacht ist. Da dieses Rauschen additiv überlagert ist, ändern sich die Minimal- und Maximalwerte der in Zeilen a1 und a2 dargestellten Signale gleichsinnig. Bei der gewählten Darstellung wurde angenommen, dass die Rauschspannung (RI, RII) in den beiden Kanälen (KI, KII) verschiedene Frequenzen aufweist.

Beide Signale werden nun je einer Impedanzwandlerstufe, jeweils bestehend aus einem Transistor 53 bzw. 54, einem Basiswiderstand 55 bzw. 56 und einem Emitterwiderstand 57 bzw. 58 zugeführt. Die Kollektoren der Transistoren 53 und 54 sind an den positiven Pol 59 der Betriebsspannungsquelle von beispielsweise + 15 V angeschlossen, während die Arbeitswiderstände 57 und 58 mit dem negativen Pol 60 einer Betriebsspannungsquelle von beispielsweise − 12 V verbunden sind. Vom Ausgang des Impedanzwandlers gelangen die Signale zu je einer Schwarzsteuerschaltung, welche jeweils aus einem Kondensator 61 bzw. 62, einem Transistor 63 bzw. 64 sowie einem Widerstand 65 bzw. 66 besteht. Diese Schwarzsteuerschaltung legt den Arbeitspunkt der nachfolgenden Schaltungen fest. Zur Gewährleistung einer genügend grossen Zeitkonstante der Schwarzsteuerschaltungen sind an diese weitere Impedanzwandler, bestehend aus den Feldeffekttransistoren 67 und 68 angeschlossen, deren Arbeitswiderstände 69 und 70 mit den Basen der Transistoren 71 und 72 verbunden sind, die wiederum untereinander emittergekoppelt sind und einen gemeinsamen Emitterwiderstand 73 aufweisen.

Die Transistoren 71 und 72 wirken als sogenannte NAM-Schaltung («Nicht-Additive-Mischung»). Von denjenigen Spannungen, welche den Basen der Transistoren 71 und 72 zugeführt werden, wird diejenige zum Schaltungspunkt 74 weitergeleitet, welche einen negativeren Momentanwert aufweist.

Wegen der zeitlich versetzten Ansteuerung der beiden Sensorausgänge 8 und 9 wird abwechselnd von beiden Sensoren der negative Spitzenwert des Ausgangssignals zum Schaltungspunkt 74 geleitet. Dieser negative Spitzenwert verkörpert – wie im Zusammenhang mit Fig. 5b erläutert – das Nutzsignal, welchem die Rauschspannung überlagert ist. In Fig. 5a wurde deshalb die Spannung am Schaltungspunkt 74 mit $U_{S+N}$ bezeichnet, wobei S für «Signal» und N für «Noise» steht. Eine ähnliche NAM-Schaltung ist mit Hilfe der Transistoren 73′ und 74′ und mit Hilfe des Widerstandes 75 aufgebaut, wobei die Transistoren 73′ und 74′ vom entgegengesetzten Leitfähigkeitstyp wie die Transistoren 71 und 72 sind. Daraus ergibt sich, dass die zweite NAM-Schaltung die positiven Spitzen des in Zeile b der Fig. 5b gezeigten Signals weiterleitet. Diese enthalten lediglich die Rauschspannung und sind daher mit $U_N$ gekennzeichnet.

Erfindungsgemäss sollen nun die Ausgangsspannungen der NAM-Schaltungen voneinander subtrahiert werden. Dieses erfolgt in einem Operationsverstärker 76, welcher mit Hilfe des Widerstandes 77 gegengekoppelt ist. Der invertierende Eingang des Operationsverstärkers 76 ist mit der Spannung $U_{S+N}$ beaufschlagt, wozu diese über einen Impedanzwandler geleitet wird. Der Impedanzwandler besteht aus dem Transistor 78, dem Basiswiderstand 79 und dem Arbeitswiderstand 80. Ferner ist ein einstellbarer Längswiderstand 81, mit dessen Hilfe die Verstärkung des Operationsverstärkers 76 eingestellt werden kann, und ein Widerstand 82 zur Zuführung einer Vorspannung vorgesehen. Zur Entkoppelung des Gleichspannungspotentials zwischen der NAM-Schaltung und dem Impedanzwandler dient ein Kondensator 83. Die Spannung $U_N$ wird ebenfalls über einen Kondensator 84 und einen Impedanzwandler dem nichtinvertierenden Eingang des Operationsverstärkers 76 zugeführt. Der Impedanzwandler besteht aus dem Transistor 85, dem Basiswiderstand 86 und dem Arbeitswiderstand 87.

Der Ausgang des Operationsverstärkers 76 ist über einen Widerstand 88, einen Tiefpass 89 mit einer Grenzfrequenz von etwa 5,5 MHz mit dem Ausgang 90 der Schaltungsanordnung verbunden. Der Tiefpass 89 dient dazu, die Abtastfrequenz sowie deren Seitenbänder aus dem Signalgemisch herauszufiltern, so dass lediglich das Videofrequenzband erhalten bleibt.

In Fig. 5b ist ferner in Zeile c1 die Überlagerung der beiden Rauschanteile dargestellt, während in Zeile c2 die Modulation bzw. das Nutzsignal zusammen mit den beiden Rauschanteilen gezeigt ist. Die Diagramme c1 und c2 stellen also die Signale $U_N$ und $U_{S+N}$ dar. Die Subtraktion beider Signale ergibt das in Zeile d dargestellte Ergebnis.

**Patentansprüche**

1. Verfahren zur Unterdrückung von additiv überlagertem niederfrequentem Rauschen bei verstärkten Ausgangssignalen von opto-elektronischen Halbleiter-Zeilensensoren (1, 2, 3), welche über zwei Ausgänge (8, 9) verfügen, deren Ausgangssignale innerhalb einer Abtasttaktperiode je einen von der Helligkeit abhängigen Maximalwert und einen von der Helligkeit unabhängigen Minimalwert aufweisen und um 180° zueinander phasenverschoben sind, dadurch gekennzeichnet, dass die Maximalwerte von den Minimalwerten getrennt und danach jeweils zeitlich zusammenfallende Maximal- und Minimalwerte voneinander subtrahiert werden.

2. Anordnung zur Durchführung des Verfahrens nach Anspruch 1, bei welcher zur Unterdrückung von additiv überlagertem niederfrequentem Rauschen bei verstärkten Ausgangssignalen ein optoelektronischer Halbleiter-Zeilensensor (1, 2, 3) über zwei Ausgänge (8, 9) verfügt, deren Ausgangssignale innerhalb einer Abtasttaktperiode je einen von der Helligkeit abhängigen Maximalwert und einen von der Helligkeit unabhängigen Minimalwert aufweisen und die in Bezug auf ihre Maximal- und Minimalwerte um 180° phasenverschoben zueinander sind, dadurch gekennzeichnet, dass die beiden Ausgänge (8, 9) des Halbleiter-Zeilensensors (1, 2, 3) mit je einem Eingang zweier zur Trennung der Minimalwerte von den Maximalwerten vorgesehener Schwellwertschaltungen (22, 23) verbunden sind, dass deren Ausgänge an je einen Eingang einer Subtrahierschaltung (24) angeschlossen sind, an deren Ausgang das rauschbefreite Videosignal nach Tiefpassfilterung (25) abnehmbar ist.

3. Anordnung zur Durchführung des Verfahrens nach Anspruch 1, bei welcher zur Unterdrückung von additiv überlagertem niederfrequentem Rauschen bei verstärkten Ausgangssignalen ein optoelektronischer Halbleiter-Zeilensensor (1, 2, 3) über zwei Ausgänge (8, 9) verfügt, deren Ausgangssignale innerhalb einer Abtasttaktperiode je einen von der Helligkeit abhängigen Maximalwert und einen von der Helligkeit unabhängigen Minimalwert aufweisen und die in Bezug auf ihre Maximal- und Minimalwerte um 180° phasenverschoben zueinander sind, dadurch gekennzeichnet, dass die beiden Ausgänge (8, 9) des Halbleiter-Zeilensensors (1, 2, 3) mit je einem Eingang zweier zur Trennung der Minimalwerte von den Maximalwerten vorgesehener nichtadditiver Mischschaltungen (26, 27) entgegengesetzter Polarität verbunden sind, dass deren Ausgänge an je einen Eingang einer Subtrahierschaltung (24) angeschlossen sind, an deren Ausgang das rauschbefreite Videosignal nach Tiefpassfilterung (25) abnehmbar ist.

4. Anordnung nach Anspruch 3, dadurch gekennzeichnet, dass die erste nichtadditive Mischschaltung von zwei Transistoren (71, 72) gebildet ist, deren Emitter über einen gemeinsamen Arbeitswiderstand (73) mit konstantem Potential verbunden sind und deren Basen mit je einem Ausgangssignal des Halbleiter-Zeilensensors (1, 2, 3) beaufschlagt sind, und dass die zweite nichtadditive Mischschaltung aus zwei weiteren Transistoren (73', 74') vom entgegengesetzten Leitfähigkeitstyp gebildet ist, deren Emitter über einen gemeinsamen weiteren Widerstand (75) mit konstantem Potential verbunden sind und deren Basen ebenfalls mit je einem Ausgangssignal des Halbleiter-Zeilensensors beaufschlagt sind.

**Claims**

1. Method for suppressing additively superimposed low frequency noise in the case of amplified output signals of optoelectronic semiconductor line sensors (1, 2, 3), which have two outputs (8, 9), whose output signals have within a scanning clock period in each case one maximum value dependent on the brightness and one minimum value independent of the brightness and are phase-shifted by 180° relative to one another, characterized in that the maximum values are separated from the minimum values and then in each case time-coinciding maximum and minimum values are subtracted from one another.

2. Arrangement for performing the method according to claim 1, in which for suppressing additively superimposed low frequency noise in the case of amplified output signals, an optoelectronic semiconductor line sensor (1, 2, 3) has two outputs (8, 9), whose output signals within a scanning clock period have in each case one maximum value dependent on the brightness and one minimum value independent of the brightness and which are phase-shifted by 180° from one another with respect to their maximum and minimum values, characterized in that the two outputs (8, 9) of the semiconductor line sensor (1, 2, 3) are connected with in each case one input of two threshold circuits (22, 23) provided for separating the minimum values from the maximum values and their outputs are in each case connected to an input of a subtractor circuit (24), from whose output can be taken the noise-freed video signal following low pass filtering (25).

3. Arrangement for performing the method according to claim 1, in which for suppressing additively superimposed low frequency noise in the case of amplified output signals, an optoelectronic semiconductor line sensor (1, 2, 3) has two outputs (8, 9), whose output signals within a scanning clock period have in each case one maximum value dependent on the brightness and one minimum value independent of the brightness and which are phase-shifted by 180° from one another with respect to their maximum and minimum values, characterized in that the two outputs (8, 9) of the semiconductor line sensor (1, 2, 3) are connected with in each case one input of two non-additive mixing circuits (26, 27) of opposite polarity provided for separating the minimum values from the maximum values and that their outputs are connected to in each case one input of a subtractor circuit (24), at whose output can be taken the noise-freed video signal following low pass filtering (25).

4. Arrangement according to claim 3, characterized in that the first non-additive mixing circuit is formed by two transistors (71, 72), whose emitters are connected across a common load resistor (73) with constant potential and whose bases are supplied with in each case one output signal of the semiconductor line sensor (1, 2, 3) and that the second non-additive mixing circuit is formed from two further transistors (73', 74') of opposite conductivity, whose emitters are connected across a common, further resistor (75) with constant potentials and whose bases are also in each case supplied with in each case one output signal of the semiconductor line sensor.

**Revendications**

1. Procédé pour supprimer un bruit basse-fréquence superposé de façon additive, dans des signaux de sortie amplifiés de détecteurs en ligne opto-électroniques à semi-conducteurs (1, 2, 3), qui disposent de deux sorties (8, 9) et dont les signaux de sortie à l'intérieur d'une période élémentaire, comportent respectivement une valeur maximale dépendante de la luminance, et une valeur minimale indépendante de la luminance, et sont décalés en phases l'un par rapport à l'autre de 180°, procédé caractérisé en ce que les valeurs maximales sont séparées des valeurs minimales et qu'ensuite, les valeurs maximales et les valeurs minimales coïncidant respectivement dans le temps sont soustraites les unes des autres.

2. Dispositif pour la mise en œuvre du procédé selon la revendication 1, dispositif dans lequel pour supprimer un bruit basse fréquence superposé additivement, dans les signaux de sortie amplifiés, un détecteur opto-électronique en lignes à semi-conducteurs (1, 2, 3) dispose de deux sorties (8, 9) dont les signaux de sortie à l'intérieur d'une période élémentaire, comportent respectivement une valeur maximale dépendante de la luminance et une valeur minimale indépendante de la luminance, et sont décalés en phases de 180° l'un par rapport à l'autre, en ce qui concerne leurs valeurs maximales et minimales, dispositif caractérisé en ce que les deux sorties (8, 9) du détecteur en ligne à semi-conducteurs (1, 2, 3) sont chacune reliées à une entrée de deux circuits à valeurs de seuil (22, 23) prévue pour séparer les valeurs minimales des valeurs maximales, les sorties de ces circuits étant chacune raccordée à une entrée d'un circuit de soustraction (24), à la sortie duquel le signal vidéo libéré du bruit est susceptible d'être prélevé après filtration passe-bas, (25).

3. Dispositif pour la mise en œuvre du procédé selon la revendication 1, dans lequel pour supprimer un bruit basse fréquence superposé additivement, dans des signaux de sortie amplifiés, un détecteur en ligne opto-électronique à semi-conducteurs (1, 2, 3) dispose de deux sorties (8, 9) dont les signaux de sortie à l'intérieur d'une période élémentaire, comportent respectivement une valeur maximale dépendante de la luminance, et une valeur minimale indépendante de la luminance, et sont décalés l'un par rapport à l'autre en phases de 180° en ce qui concerne leurs valeurs maximale et minimale, dispositif caractérisé en ce que les deux sorties (8, 9) du détecteur en ligne à semi-conducteurs (1, 2, 3) sont chacune raccordées à une entrée de circuit mélangeur non additif (26, 27) de polarités opposées, prévue pour séparer les valeurs minimales des valeurs maximales, les sorties de ces circuits étant chacune raccordées à une entrée d'un circuit de soustraction (24) à la sortie duquel le signal vidéo libéré du bruit peut être prélevé après filtration passe-bas (25).

4. Dispositif selon la revendication 3, caractérisé en ce que le premier circuit de mélange non additif est constitué par deux transistors (71, 72) dont les émetteurs sont reliés à un potentiel constant, par l'intermédiaire d'une résistance de fonctionnement commune (73), et dont les bases sont respectivement alimentées par un signal de sortie du détecteur en ligne à semi-conducteurs (1, 2, 3), le second circuit mélangeur non additif étant constitué de deux autres transistors (73', 74') de type de conductibilité opposées, dont les émetteurs sont reliés à un potentiel constant par l'intermédiaire d'une autre résistance commune (75) et dont les bases sont également alimentées respectivement par un signal de sortie du détecteur en ligne à semi-conducteurs.

# Fig.1

# Fig.2

Fig. 3

Fig. 4

Fig. 5a

**a1**

additiv überlagerte
Rauschspannung

sw

ws Nutzsignal (Mod)

Rauschspannung

**a2**

Rauschspannung

sw Rauschspannung

ws

**b**

Schwarzsteuerpotential
max.Rauschpotential II
max.Rauschpotential I

△RII } sw

△RI } ws

KI;KII

**c1**

$U_N$    △RI + △RII

**c2**

$U_{S+N}$   Mod.+△RI+△RII

**d**

sw

Modulation

ws

Fig. 5b